# EUROPEAN PATENT APPLICATION

(11) **EP 4 230 388 A1**
(43) Date of publication of application: **23.08.2023**
(21) Application number: 21879953.4
(22) Date of filing: 06.10.2021
(51) Int. Cl.: B29C 65/74

(54) **PUNCH JOINING DEVICE FOR FILM PIECE, DEVICE FOR MANUFACTURING FILM, DEVICE FOR MANUFACTURING BAG-SHAPED CONTAINER, PUNCH JOINING METHOD FOR FILM PIECE, MANUFACTURING METHOD FOR FILM, AND MANUFACTURING METHOD FOR BAG-SHAPED CONTAINER**

(30) Priority: 16.10.2020 JP 2020174365
(71) Applicant: Idemitsu Unitech Co., Ltd., Tokyo 108-0014 (JP)
(72) Inventor: KATADA, Ryo, Minato-ku Tokyo 108-0014 (JP)
(74) Representative: Gille Hrabal Partnerschaftsgesellschaft mbB Patentanwälte
(86) International application number: PCT/JP2021/037016
(87) International publication number: WO 2022/080213

(57) **Abstract**

There is provided a device for blanking and bonding a film piece, the device including: a film-piece blanking mechanism including a first member having a first edge formed along an inner periphery of the first member, and a second member capable of moving relative to the first member and having a second edge formed along an outer periphery of the second member, the second edge having a profile corresponding to a profile of the first edge; and a bonding unit capable of moving inside the second member independently of the second member in the same direction as the second member, and capable of bonding, by pressing, the film piece blanked by the blanking mechanism to a resin member held facing the film piece.

## Description

### TECHNICAL FIELD

The present invention relates to a device for blanking and bonding a film piece, a film manufacturing device, a manufacturing device of a bag-shaped container, a method of blanking and bonding a film piece, a film manufacturing method, and a manufacturing method of a bag-shaped container.

### BACKGROUND ART

Various bags including a zipper tape bonded to a bag body made of a film have been known as a bag-shaped container for packaging medicine and food. For instance, as described in Patent Literature 1, some of these bags provided with the zipper tape are provided by: back-bonding (i.e. bonding at the back) peripheries of a single film at a back side and bonding the peripheries of the film in a direction orthogonal to the back-bonding direction to form a bag body; connecting a reclosable fastener to a front wall (i.e. one of facing walls (front and back walls)) of the bag body; and attaching a pull-out plug or a thread for opening the bag at a part close to the fastener.

In the above-described technique of Patent Literature 1, a plurality of holes are made in the front wall using a punching mechanism to form a pull-out plug. Sealability of the bag is likely to decrease due to these holes. It is also disclosed that a thread for unsealing the bag is provided on an inner side of the front wall. However, no specific process for exposing an end of the thread to an outside to form a tab is disclosed. In order for the end of the thread to serve as a tab, a hole that allows the film of the bag body to be penetrated with the thread may be made in the front wall. However, sealability of the bag is likely to decrease due to the hole also in this arrangement.

In consideration of this point, Patent Literature 2 proposes highly sealable bag and film and a manufacturing method of the bag. Specifically, a bag includes: a bag body defining a containing space; an elongated member provided on one surface of a film forming the bag body, the elongated member including a tearing strip and a base strip; and a tab having an outer edge defined by a cutting line penetrating through the base strip and the film. The base strip is interposed between the other surface of the film and the tearing strip along a longitudinal direction of the tearing strip. A protector covering the tab is provided on a side of the film where the base strip is provided.

### CITATION LIST

### PATENT LITERATURE(S)

Patent Literature 1: JP11-510461 A
Patent Literature 2: JP2018-188196 A

### SUMMARY OF THE INVENTION

### PROBLEMS TO BE SOLVED BY THE INVENTION

According to the above-described technique of Patent Literature 2, since the protector prevents communication between the containing space and an external space through the cutting line of the tab, sealability of the bag can be maintained while the tearing strip and the tab facilitate opening the bag. Although Patent Literature 2 describes a step of bonding the protector to the film and the elongated member while holding the protector at a predetermined position, Patent Literature 2 does not describe, for instance, a step of cutting out film pieces having a suitable shape for the protector since known techniques are available for this step. Although cutting out the film pieces by known techniques does not cause any problem, a manufacturing process can be economical if, for instance, the step of cutting out the film pieces for the protector and a step of forming the protector by bonding the film pieces can be integrated.

An object of the invention is to provide: a device for blanking and bonding a film piece, the device capable of making a manufacturing process economical by integrating steps of cutting out and bonding film pieces for forming a protector; a film manufacturing device; a manufacturing device of a bag-shaped container; a method of blanking and bonding a film piece; a film manufacturing method; and a manufacturing method of a bag-shaped container.

### MEANS FOR SOLVING THE PROBLEMS

[1] According to an aspect of the invention, a device for blanking and bonding a film piece includes: a blanking mechanism configured to blank the film piece and including a first member having a first edge formed along an inner periphery of the first member, and a second member capable of moving relative to the first member and having a second edge formed along an outer periphery of the second member, the second edge having a profile corresponding to a profile of the first edge, and a bonding unit capable of moving inside the second member independently of the second member in the same direction as the second member and capable of bonding a film piece blanked by the blanking mechanism to a resin member held facing the film piece by pressing the film piece to the resin member.
[2] The device according to [1] further includes a heating unit configured to heat a surface of the bonding unit being in contact with the film piece.
[3] In the device according to [1] or [2], the profile of the second edge is inclined to the profile of the first edge.
[4] In the device according to [1] or [2], the profile of the second edge has both ends protruding to form a curved portion.
[5] According to another aspect of invention, a film manufacturing device includes the device according to any one of [1] to [4] in which the resin member includes: a continuous film; and an elongated member bonded to the continuous film and extending in a width direction of the continuous film, the elongated member having a cutting, and the bonding unit is configured to bond the film piece to an area covering the cutting of the resin member.
[6] In the film manufacturing device according to [5], the cutting of the elongated member includes a first cutting and a second cutting at two positions, respectively, in a longitudinal direction, and the bonding unit is configured to bond the film piece to an area covering the first cutting of the resin member.
[7] The film manufacturing device according to [6] further includes: a first device for blanking and bonding a first film piece, the first device including the bonding unit configured to bond the first film piece to the area covering the first cutting of the resin member; and a second device for blanking and bonding a second film piece, the second device including the bonding unit configured to bond the second film piece to an area covering the second cutting of the resin member.
[8] In the film manufacturing device according to [6] or [7], the first cutting is formed near a first end portion of the elongated member in the longitudinal direction, and the second cutting is formed near a second end portion of the elongated member in the longitudinal direction, the second end portion being opposite to the first end portion.
[9] According to still another aspect of the invention a manufacturing device of a bag-shaped container includes the film manufacturing device according to any one of [5] to [8], and a bag-making mechanism configured to make the film into a bag.
[10] According to a further aspect of the invention, a method of blanking and bonding a film piece includes: blanking a first film to obtain a film piece, by moving a second member having a second edge formed along an outer periphery of the second member relative to a first member having a first edge formed along an inner periphery of the first member, the second edge having a profile corresponding to a profile of the first edge; and bonding the film piece to a resin member held facing the film piece by pressing the film piece to the resin member by moving a pressing mechanism inside the second member later than the second member in the same direction as the second member.
[11] The method according to [10] further includes heating the film piece pressed to the resin member.
[12] According to a still further aspect of the invention a film manufacturing method includes the method according to [10] or [11] in which the resin member includes: a second film that is continuous; and an elongated member bonded to the second film and extending in a width direction of the second film, the elongated member having a cutting, and in the bonding of the film piece, the film piece is bonded to an area covering the cutting of the resin member.
[13] In the film manufacturing method according to [12], the cutting of the elongated member includes a first cutting and a second cutting at two positions, respectively, in a longitudinal direction, and in the bonding of the film piece, the film piece is bonded to an area covering the first cutting of the resin member.
[14] In the film manufacturing method according to [13], the film piece includes a first film piece and a second piece, the first film piece is bonded to the area covering the first cutting of the resin member, and the second film piece is bonded to an area covering the second cutting of the resin member.
[15] In the film manufacturing method according to [13] or [14], the first cutting is formed near a first end portion of the elongated member in the longitudinal direction, and the second cutting is formed near a second end portion of the elongated member in the longitudinal direction, the second end portion being opposite to the first end portion.
[16] According to a still further aspect of the invention, a manufacturing method of a bag-shaped container includes: the film manufacturing method according to any one of [12] to [15]; and making the second film into a bag.

With the above configurations, a single device can perform cutting out the film piece and bonding the film piece to the resin member. This makes it possible, for instance, to save a space for a manufacturing device due to reduction of a line length of the manufacturing device. This also makes it unnecessary to configure a device for transporting and feeding the film piece cut out. Therefore, the manufacturing process can be made economical.

### BRIEF DESCRIPTION OF DRAWINGS

Fig. 1 is a plan view showing a bag-shaped container in an exemplary embodiment of the invention.
Fig. 2 is a first exemplary cross-sectional view taken along a line II-II in Fig. 1.
Fig. 3 is a second exemplary cross-sectional view taken along the line II-II in Fig. 1.
Fig. 4 schematically shows a manufacturing process of the bag-shaped container shown in Fig. 1.
Fig. 5 is an enlarged cross-sectional view showing a protector attachment portion of a manufacturing device shown in Fig. 4.
Fig. 6 shows an operating state of the protector attachment portion shown in Fig. 5.
Fig. 7 is a cross-sectional view taken along a line VII-VII in Fig. 5.
Fig. 8 shows an example of a profile of a blanking blade.
Fig. 9 shows another example of the profile of the blanking blade.

### DESCRIPTION OF EMBODIMENT(S)

A preferable exemplary embodiment of the invention will be described in detail with reference to the attached drawings. It is to be noted that, in this description and the accompanying drawings, components that have substantially the same functional configuration are indicated by the same reference signs, and thus redundant description thereof is omitted.

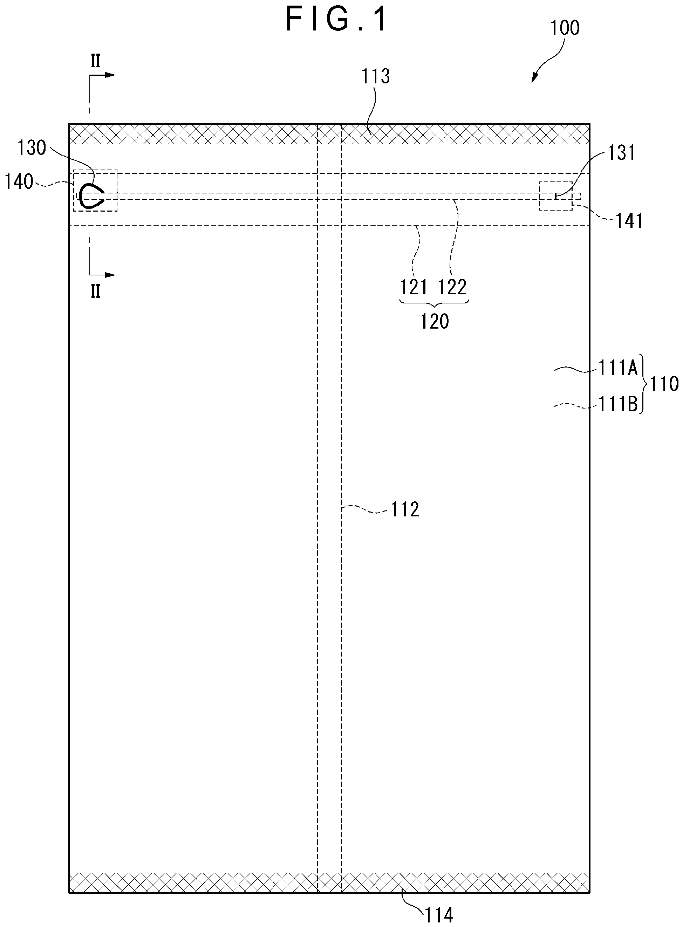

Fig. 1 is a plan view showing a bag-shaped container in an exemplary embodiment of the invention. In an illustrated example, a bag-shaped container 100 includes: a film 110 having a first surface 111A and a second surface 111B that form a bag body and face each other; an elongated member 120 bonded to the first surface 111A of the film 110; and a protector 140. The elongated member 120 includes a base strip 121 and a tearing strip 122. A tab 130 is formed near an end portion of the elongated member 120 in a longitudinal direction.

The film 110 includes, for instance, a single-layer or multi-layer thermoplastic resin film. Specifically, a thermoplastic resin may be low density polyethylene (LDPE), linear low density polyethylene (LLDPE), or polypropylene (PP). PP may be polypropylene homopolymer (HPP), polypropylene random copolymer (RPP), or polypropylene block copolymer (BPP). In a case where the film 110 includes a multilayered film, biaxially oriented polypropylene (OPP), biaxially oriented polyethylene terephthalate (OPET), or biaxially oriented nylon (ONy) may be used for a surface base. The film as the film 110 may include a layer of a metallic material such as aluminum or a layer of an inorganic material. Alternatively, the film as the film 110 may be a resin film containing bioplastic such as biopolyethylene at any amount.

In the exemplary embodiment, the film 110 is folded back at a predetermined dimension from both end portions and the end portions of the folded film 110 are linearly bonded to each other to form a linear seal portion 112, thereby defining the first surface 111A and the second surface 111B of the film 110. An upper end and a lower end of the bag body are sealed by seal portions 113 and 114, respectively. It is to be noted that, for instance, when the bag-shaped container 100 completely manufactured is filled with contents, at least one of the seal portion 113 or the seal portion 114 may not be formed.

The elongated member 120 includes: the base strip 121; and the tearing strip 122 made using a different material from a material for the base strip 121. The elongated member 120 is bonded to the first surface 111A of the film 110 forming the container body. The tab 130, which is exemplified by a C-shaped cutting, penetrates the base strip 121 and the tearing strip 122 of the elongated member 120 and the first surface 111A of the film 110. A user can open the bag-shaped container 100 by, at the time of opening, pulling the tearing strip 122 with the tab 130 being a starting point and tearing the first surface 111A of the film 110 with the tearing strip 122. In the exemplary embodiment, the tab 130 is formed near one of the end portions of the elongated member 120 in the longitudinal direction.

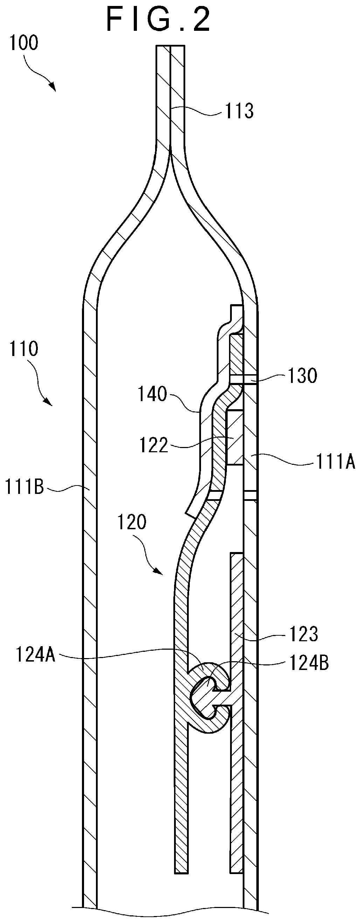

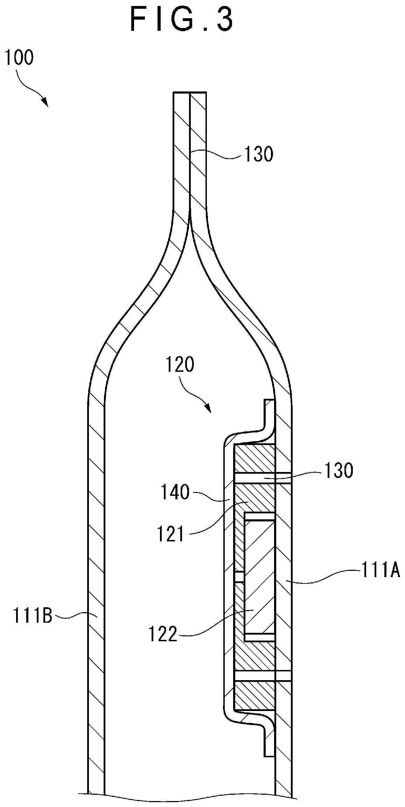

For instance, as shown in the cross-sectional view of Fig. 2, the elongated member 120 may further include an opposite base strip 123, and engagement portions 124A and 124B respectively protruding from the base strip 121 and the opposite base strip 123 and being mutually engageable, thereby forming a zipper tape. Although a pair of female engagement portion 124A and male engagement portion 124B are illustrated, the engagement portions 124A and 124B are not limited to this example. Various shapes of engagement portions of known zipper tapes having a combination of a claw shape, a hook shape, a knob shape, or the like are applicable. Two or more pairs of engagement portions may be formed. One or more pairs of engagement portions having different shapes (e.g., female and male shapes and hook shapes) may be provided. Alternatively, two or more pairs of engagement portions having the same shape (e.g., female and male shapes) may be provided. Alternatively, as shown in the cross-sectional view of Fig. 3, the elongated member 120 may include a single base strip 121, thereby forming a simple tape that is not a zipper tape.

In the above-described elongated member 120, the base strip 121 is formed by extrusion of, for instance, polyolefin resin. Specifically, the base strip 121 may be made of low density polyethylene (LDPE), linear low density polyethylene (LLDPE), or polypropylene (PP). PP may be polypropylene homopolymer (HPP), polypropylene random copolymer (RPP), or polypropylene block copolymer (BPP). The base strip 121 may be environmentally friendly bioplastics, or may be mixtures of fossil fuel-derived resins and biomass plastics such as biopolyethylene. Known additives such as stabilizers, antioxidants, lubricants, antistatic agents, or colorants may be added to the material of the base strip 121 as needed.

The tearing strip 122 is formed by extrusion of, for instance, polyolefin resin in the same manner as the base strip 121. By forming the tearing strip 122 using a resin that is less compatible with the resin forming the base strip 121, interfacial peeling between the base strip 121 and the tearing strip 122 can be achieved at the bonding surfaces. For this purpose, for instance, one of the base strip 121 and the tearing strip 122 may be formed using low density polyethylene resin and the other of the base strip 121 and the tearing strip 122 may be formed using polypropylene random copolymer resin. Specific examples of the combination of incompatible resins include combinations of low-density polyethylene (LDPE)/random polypropylene (RPP), linear low-density polyethylene (LLDPE)/RPP (in some of which m-LL may be included), LDPE/homopolypropylene (HPP), LLDPE/HPP (partially including m-LL), LDPE/polystyrene (PS), LLDPE/PS (partially including m-LL), RPP/PS, HPP/PS, LDPE/polyethylene terephthalate (PET), LLDPE/PET, RPP/PET, HPP/PET, PS/PET, LDPE/nylon (Ny), LLDPE/Ny, RPP/Ny, HPP/Ny, and PS/Ny.

The protector 140 is disposed in a manner to cover an area of the elongated member 120, where the tab 130 is cut out, at the inside of the container body, and is bonded to the elongated member 120. The protector 140 may extend beyond the elongated member 120 and be also bonded to the first surface 111A of the film 110. The protector 140 can seal, at the inside of the container body, the space in communication with the cutting of the tab 130, thereby improving sealability of the bag-shaped container 100 before being opened by using the tearing strip 122. The protector 140 is formed, for instance, using a material similar to that of the film 110 described above. It is possible to select different materials for the protector 140 and the film 110 among the above-described materials. However, it is more preferable to select the same material for the protector 140 and the film 110.

In the bag-shaped container 100, a cutting 131 that penetrates at least the first surface 111A of the film 110 and the tearing strip 122 may be formed at a different position from the tab 130, for instance, near an end portion of the elongated member 120 opposite from the end portion where the tab 130 is formed. The cutting 131 formed easily defines an end point of tearing of the first surface 111A by the tearing strip 122. For instance, the cutting 131 may be formed penetrating the base strip 121 of the elongated member 120 in addition to the first surface 111A and the tearing strip 122. In this case, a protector 141 may be disposed so as to cover, at the inside of the container body, an area where the cutting 131 is formed and the protector 141 is bonded to the elongated member 120, thereby improving sealability of the bag-shaped container 100 before being opened by using the tearing strip 122. The protector 141 may also be bonded to the first surface 111A in addition to the elongated member 120 in the same manner as the above-described protector 140. Alternatively, the cutting 131 may penetrate the first surface 111A and the tearing strip 122 without penetrating the base strip 121. In this case, since the space in communication with the cutting 131 does not reach the inside of the container body, disposition of the protector 141 is not requisite.

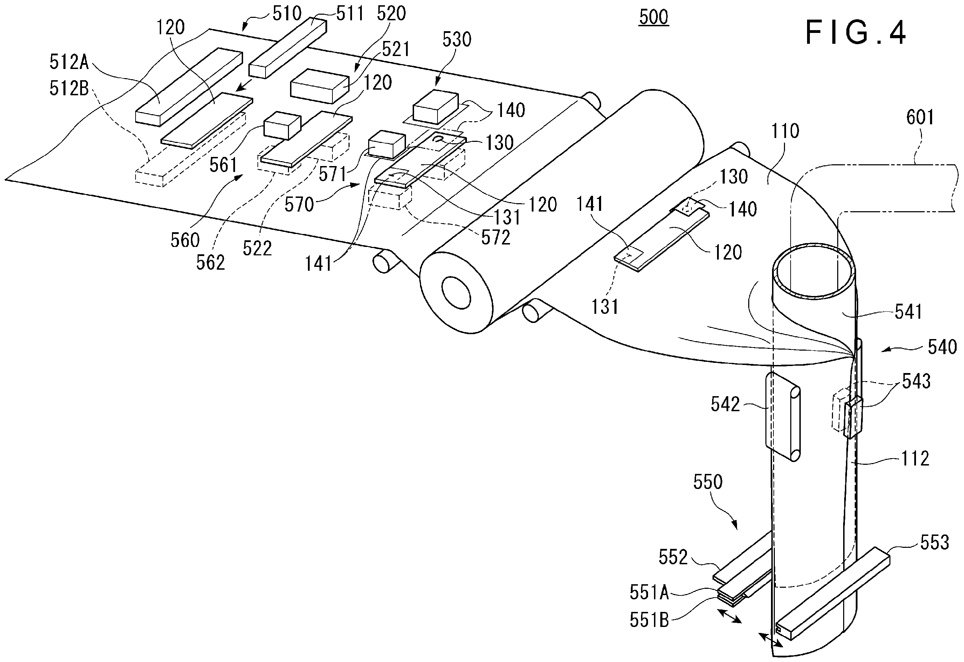

Fig. 4 schematically illustrates a manufacturing process of the bag-shaped container shown in Fig. 1. In an illustrated example, a manufacturing device 500 includes an elongated-member attachment portion 510, a tab former 520, a protector attachment portion 530, a bag body former 540, and a top-bottom former 550. Specific configurations of the above components will be explained below. In the manufacturing device 500, the continuous film 110 drawn from a roll (not shown) or the like is processed at each of the above components while be intermittently transported. Each component will be further explained below.

The elongated-member attachment portion 510 bonds the elongated member 120 extending in a width direction of the film 110 to the film 110 transported in a longitudinal direction. The elongated member 120 includes the base strip 121 and the tearing strip 122 shown in Fig. 1. All of these components are elongated members extending in the same direction. Accordingly, after being formed in advance by, for instance, extrusion (including co-extrusion), the components can be collectively bonded as the elongated member 120 to the film 110. In this case, the manufacturing process further includes a step of integrally forming the base strip 121 and the tearing strip 122 by, for instance, co-extrusion. This step is carried out by a molding device such as an extruder included in the manufacturing device 500 or provided separately from the manufacturing device 500.

Specifically, the elongated-member attachment portion 510 includes a feeder 511, a receiver base 512A, and a seal bar 512B. The feeder 511 feeds the elongated member 120 having a predetermined length and locates the elongated member 120 at a predetermined position on the film 110. The feeder 511 may include a cutter for cutting out the elongated member 120. The receiver base 512A and the seal bar 512B sandwich the film 110 and the elongated member 120 therebetween and bond the elongated member 120 to the film 110 by heat sealing, ultrasonic sealing, or the like. Alternatively, an adhesive may be applied between the elongated member 120 and the film 110 in advance, and the receiver base 512A and the seal bar 512B sandwich the superimposed film 110 and elongated member 120 therebetween and press to bond the superimposed film 110 and elongated member 120 to each other. The receiver base 512A is formed of, for instance, silicone.

The tab former 520 makes the tab 130 in the film 110 and the elongated member 120 bonded to the film 110. Specifically, the tab former 520 includes a cutter 521 and a receiver base 522. The cutter 521 has a planar shape (not shown) corresponding to a cutting that forms the tab 130. In the exemplary embodiment, since the tab 130 is in a form of a C-shaped cutting, the cutter 521 also has a C-shaped planar shape. Since the film 110 has not been folded at this stage, the tab 130 can be formed by the cutter 521 cutting through the film 110 and the elongated member 120 in a thickness direction.

The protector attachment portion 530 bonds the protector 140 onto an area of the elongated member 120 in a manner to cover the cutting that is the tab 130. A detailed configuration of the protector attachment portion 530 will be described later.

The bag body former 540 and the top-bottom former 550 form a bag-making mechanism for making the film 110 into a bag. Specifically, the bag body former 540 includes a roll core 541, a conveyor belt 542, and a sealer 543. The film 110 is transported downward from above with the conveyor belt 542 while being wound around the roll core 541. A substantially circular cross section of an upper portion of the roll core 541 makes the film 110 be wound into a roll smoothly. The film 110 wound in a roll is folded at widthwise sides thereof. The first surface 111A and the second surface 111B described above with reference to Fig. 1 are thus formed. A side of the film 110 to which the elongated member 120 is bonded is the first surface 111A. The sealer 543 bonds widthwise end portions of the film 110 wound in a roll, thereby forming the seal portion 112. A side of the film 110 to which the seal portion 112 is bonded is the second surface 111B. The sealer 543 forms the seal portion 112 by a method such as heat sealing in the same manner as the receiver base 512A and the seal bar 512B described above.

The top-bottom former 550 forms the seal portions 113 and 114 in the film 110 folded at the widthwise sides, and cuts the film 110 in the width direction, thereby making the bag-shaped container 100. The top-bottom former 550 includes seal bars 551A and 551B, a cutter 552, and a receiver base 553. The seal bars 551A and 551B are vertically opposed to each other with the cutter 552 provided therebetween. With these opposed parts of the seal bars 551A and 551B, the seal portions 113 and 114 are formed in the film 110. The seal bars 551A and 551B form the seal portions 113 and 114 by a method such as heat sealing in the same manner as the receiver base 512A and the seal bar 512B described above. The cutter 552 moves toward or away from the receiver base 553 and cuts the film 110 in the width direction near the seal portions 113 and 114.

The above-described roll core 541 is hollow. A filling device 601 is placed by insertion from above in the roll core 541. The filling device 601 discharges contents in synchronization with the film 110 being sandwiched between the seal bars 551A and 551B in the top-bottom former 550. This makes it possible to put the contents into the containing space that is defined above the seal portion 114 provided at the bottom of the bag-shaped container 100. When the seal bars 551A and 551B move away from each other, the contents as well as the film 110 are transported downward beyond the seal bars 551A and 551B. Next, the seal portion 113 is formed at the top of the bag-shaped container 100, thereby sealing the containing space.

The bag-shaped container 100 can be manufactured by the above-described manufacturing process. It is to be noted that the above-described manufacturing process is an example and can be modified variously. For instance, the film 110 that has undergone the manufacturing process up to the step of using the protector attachment portion 530 may be wound again around a roll, transported and stored, following which the film 110 may be drawn from the roll and the step of using the bag body former 540 and subsequent steps may be executed. In this case, the manufacturing process of the film provided with the elongated member and the manufacturing process of the bag-shaped container using the film provided with the elongated member are executed separately.

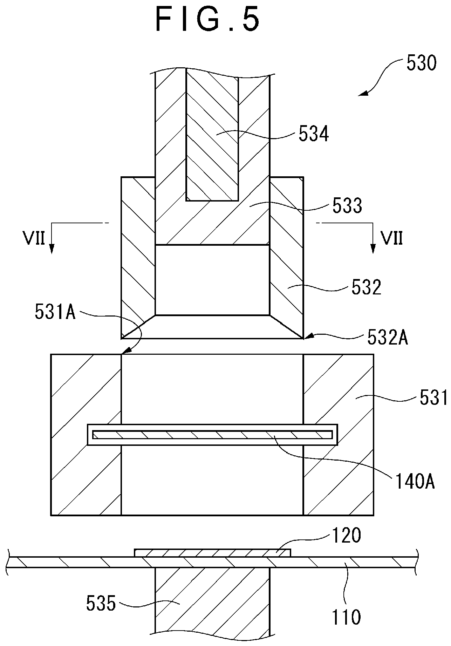

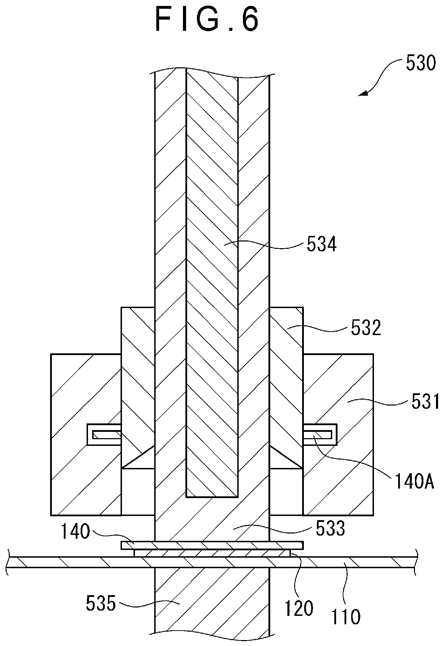

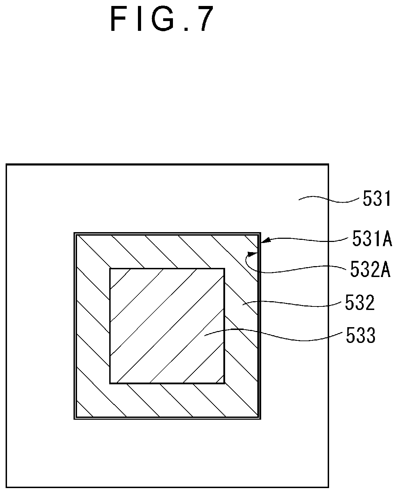

Fig. 5 is an enlarged cross-sectional view showing the protector attachment portion of the manufacturing device shown in Fig. 4. Fig. 6 shows an operating state of the protector attachment portion shown in Fig. 5. Fig. 7 is a cross-sectional view taken along the line VII-VII in Fig. 5. In the illustrated example, the protector attachment portion 530 includes: a first member 531 and a second member 532 that form a film-piece blanking mechanism; a heat plate 533; a heater 534; and a receiver base 535. The first member 531 and the second member 532 form a film-piece blanking mechanism that blanks a film 140A to obtain the protector 140 by relative movement of the second member 532 to the first member 531 as shown in Fig. 6. As shown in Fig. 7, a die blade 531A is provided along an inner periphery of the first member 531 and a blanking blade 532A is provided along an outer periphery of the second member 532.

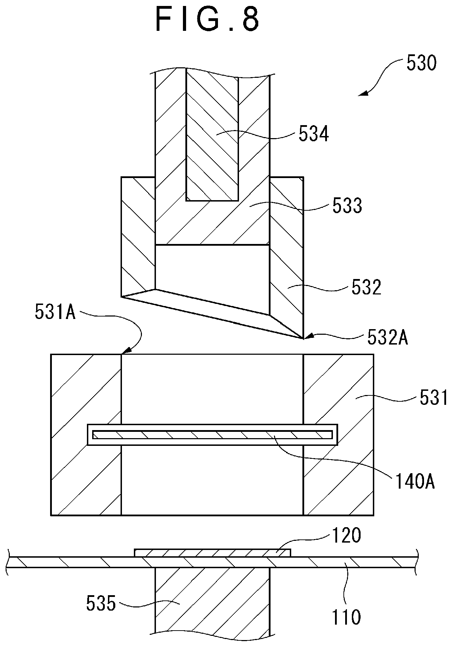

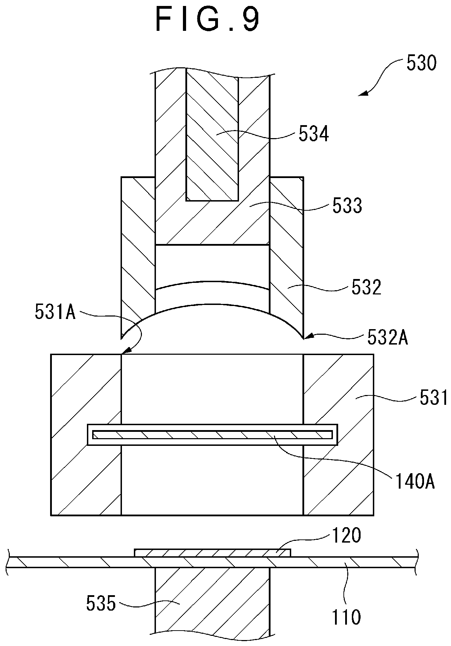

Fig. 5 exemplarily shows that an edge profile of the blanking blade 532A is substantially parallel to the film 140A. However, for instance, as shown in Fig. 8, the edge profile of the blanking blade 532A may be inclined to an edge profile of the die blade 531A, which further facilitates blanking of the film 140A. Alternatively, for instance, as shown in Fig. 9, the edge profile of the blanking blade 532A may be such that sides of the blanking blade 532A protrude to form a curved portion, which still further facilitates blanking of the film 140A.

The film 140A is sandwiched between the die blade 531A and the blanking blade 532A and is cut, obtaining a film piece by blanking. The heat plate 533 moves later than the second member 532 as shown in Fig. 6. The heat plate 533 presses the blanked film piece to a resin member in which the film 110 is bonded to the elongated member 120. The heat plate 533 forms a pressing mechanism to move inside the second member 532 to press the film piece to the resin member. At this time, the film piece, the film 110, and the elongated member 120 are sandwiched between the heat plate 533 and the receiver base 535. Since a surface of the heat plate 533 being in contact with the film piece is heated by the heater 534, the film piece is heat-sealed on the elongated member 120 according to the above-described step, thereby providing the protector 140.

In the above example, the heat plate 533 and the heater 534 form a bonding unit of the film piece, and the protector 140 is thus bonded to the elongated member 120 by heat sealing. However, for instance, an oscillator may be provided in place of the heater 534 and the protector 140 may be bonded to the elongated member 120 by ultrasonic sealing. Alternatively, in a case where an adhesive is applied in advance on the film piece or the elongated member 120, it is sufficient that the bonding unit simply presses the film piece to the elongated member 120, and a heater and an oscillator are not required. The planar shape of the protector 140 is rectangular in the above example. However, any planar shape allowing the protector 140 to cover the tab 130, such as a circular shape, an elliptical shape, and a polygonal shape is possible. Accordingly, the planar shape of the die blade 531A and the blanking blade 532A is not limited to a rectangular shape. Any planar shape as described above is possible. Fig. 6 shows that the protector 140 is bonded only to the elongated member 120. However, the protector 140 may also be bonded to the film 110 beyond the elongated member 120.

In the exemplary embodiment, since the protector attachment portion 530 includes the above-described device of blanking and bonding the film piece, a single device can perform cutting out the film piece for forming the protector 140 and bonding the film piece to the resin member including the film 110 and the elongated member 120. This makes it possible, for instance, to save a space for the manufacturing device 500 due to reduction of a line length of the manufacturing device 500. This also makes it unnecessary to configure a device for transporting and feeding the film piece cut out. Therefore, the manufacturing process can be economical.

In a case where the above-described cutting 131 is formed in the bag-shaped container 100 and the protector 141 is disposed in a manner to cover the area where the cutting 131 is formed, the manufacturing device 500 may further include a cutting former 560 and a protector attachment portion 570 as shown in Fig. 4. In this case, the cutting former 560 includes a cutter 561 and a receiver base 562. The cutter 521 has a shape corresponding to that of the cutting 131. The cutting 131 is formed by cutting through in the thickness direction the film 110 and the elongated member 120 before being folded. The protector attachment portion 570 is formed similar to the protector attachment portion 530. Fig. 4 shows a blanking-pressing mechanism 571 and a receiver base 572. The blanking-pressing mechanism 571 corresponds to the first member 531, the second member 532, the heat plate 533, and the heater 534 described with reference to Fig. 5. The protector attachment portion 570, which includes such a film-piece-blanking-bonding device as described above, can also make the manufacturing process economical in the same manner as the protector attachment portion 530.

Accordingly, the manufacturing device 500 according to the exemplary embodiment of the invention may include both or one of the protector attachment portion 530 and the protector attachment portion 570. The protector attachment portion 530 is a first film-piece-blanking-bonding device including a bonding unit for bonding the protector 140 to the area covering the cutting of the tab 130. The protector attachment portion 570 is a second film-piece-blanking-bonding device including a bonding unit for bonding the protector 141 to the area covering the cutting 131.

The preferable exemplary embodiment of the invention has been described in detail with reference to the attached drawings. However, the invention is not limited to the exemplary embodiment. It is apparent that those skilled in the technical field to which the invention belongs can arrive at various alterations and modifications within the scope of the technical idea recited in the appended claims, and it is understood that such alterations and modifications naturally fall within the technical scope of the invention.

### EXPLANATION OF CODES

100···bag-shaped container, 110···film, 111A···first surface, 111B···second surface, 112,113,114···seal portion, 120···elongated member, 121···base strip, 122 ··· strip, 130 ··· tab, 131 ··· cutting, 140,141 ··· protector, 140A ··· film, 500 ··· manufacturing device, 510···elongated-member attachment portion, 520...tab former, 530... protector attachment portion, 531...first member, 531A... die blade, 532...second member, 532A... blanking blade, 533... heat plate, 534... heater, 535... receiver base, 540...bag body former, 550...top-bottom former, 560...cutting former, 570...protector attachment portion, 571...blanking-pressing mechanism, 572...receiver base, 601 ...filling device.

## Claims

1. A device for blanking and bonding a film piece, the device comprising:
a blanking mechanism configured to blank the film piece and comprising a first member having a first edge formed along an inner periphery of the first member, and a second member capable of moving relative to the first member and having a second edge formed along an outer periphery of the second member, the second edge having a profile corresponding to a profile of the first edge, and
a bonding unit capable of moving inside the second member independently of the second member in the same direction as the second member and capable of bonding a film piece blanked by the blanking mechanism to a resin member held facing the film piece by pressing the film piece to the resin member.

2. The device according to claim 1, further comprising a heating unit configured to heat a surface of the bonding unit being in contact with the film piece.

3. The device according to claim 1 or 2, wherein the profile of the second edge is inclined to the profile of the first edge.

4. The device according to claim 1 or 2, wherein the profile of the second edge has both ends protruding to form a curved portion.

5. A film manufacturing device comprising the device according to any one of claims 1 to 4, wherein
the resin member comprises: a continuous film; and an elongated member bonded to the continuous film and extending in a width direction of the continuous film, the elongated member having a cutting, and
the bonding unit is configured to bond the film piece to an area covering the cutting of the resin member.

6. The film manufacturing device according to claim 5, wherein
the cutting of the elongated member comprises a first cutting and a second cutting at two positions, respectively, in a longitudinal direction, and
the bonding unit is configured to bond the film piece to an area covering the first cutting of the resin member.

7. The film manufacturing device according to claim 6, further comprising:
a first device for blanking and bonding a first film piece, the first device comprising the bonding unit configured to bond the first film piece to the area covering the first cutting of the resin member; and
a second device for blanking and bonding a second film piece, the second device comprising the bonding unit configured to bond the second film piece to an area covering the second cutting of the resin member.

8. The film manufacturing device according to claim 6 or 7, wherein
the first cutting is formed near a first end portion of the elongated member in the longitudinal direction, and
the second cutting is formed near a second end portion of the elongated member in the longitudinal direction, the second end portion being opposite to the first end portion.

9. A manufacturing device of a bag-shaped container, comprising:
the film manufacturing device according to any one of claims 5 to 8, and
a bag-making mechanism configured to make the film into a bag.

10. A method of blanking and bonding a film piece, comprising:
blanking a first film to obtain a film piece, by moving a second member having a second edge formed along an outer periphery of the second member relative to a first member having a first edge formed along an inner periphery of the first member, the second edge having a profile corresponding to a profile of the first edge; and
bonding the film piece to a resin member held facing the film piece by pressing the film piece to the resin member by moving a pressing mechanism inside the second member later than the second member in the same direction as the second member.

11. The method according to claim 10, further comprising heating the film piece pressed to the resin member.

12. A film manufacturing method comprising the method according to claim 10 or 11, wherein
the resin member comprises: a second film that is continuous; and an elongated member bonded to the second film and extending in a width direction of the second film, the elongated member having a cutting, and
in the bonding of the film piece, the film piece is bonded to an area covering the cutting of the resin member.

13. The film manufacturing method according to claim 12, wherein
the cutting of the elongated member comprises a first cutting and a second cutting at two positions, respectively, in a longitudinal direction, and
in the bonding of the film piece, the film piece is bonded to an area covering the first cutting of the resin member.

14. The film manufacturing method according to claim 13, wherein
the film piece comprises a first film piece and a second piece,
the first film piece is bonded to the area covering the first cutting of the resin member, and
the second film piece is bonded to an area covering the second cutting of the resin member.

15. The film manufacturing method according to claim 13 or 14, wherein
the first cutting is formed near a first end portion of the elongated member in the longitudinal direction, and
the second cutting is formed near a second end portion of the elongated member in the longitudinal direction, the second end portion being opposite to the first end portion.

16. A manufacturing method of a bag-shaped container, comprising:
the film manufacturing method according to any one of claims 12 to 15; and
making the second film into a bag.
